# EUROPEAN PATENT APPLICATION

(11) **EP 0 886 272 A2**
(43) Date of publication of application: **23.12.1998**
(21) Application number: 98111141.2
(22) Date of filing: 17.06.1998
(51) Int. Cl.: G11B 19/02, G11B 19/12, G11B 27/32, G11B 27/30

(54) **Reproducing apparatus with user's native language displaying function and user's native language displaying method**

(30) Priority: 19.06.1997 JP 162807/97
(71) Applicant: SONY CORPORATION, Tokyo (JP)
(72) Inventor: Teppei, Yokota, Shinagawa-ku, Tokyo (JP); Hideko, Kimura, Shinagawa-ku, Tokyo (JP)
(74) Representative: Körber, Wolfhart, Dr. rer.nat.

(57) **Abstract**

According to the present invention, character information such as a title of a program has been recorded in a plurality of languages on a record medium. In addition, languages in which character information has been recorded have been coded. The reproducing apparatus decodes the coded language and displays the language corresponding to the content of the disc so that the user can know the content of the disc.

## Description

### BACKGROUND OF THE INVENTION

### Field of the Invention

The present invention relates to a reproducing apparatus for a record medium such as a digital audio CD (Compact Disc) on which subcode has been recorded along with main data such as audio data and visual data

### Description of the Related Art

In a CD reproducing apparatus on which audio information has been recorded, various reproduction information is displayed for user's reference. Examples of such reproduction information are a track number and time information corresponding thereto. The reproduction information is recorded as mode 1 of Q channel of subcode.

Recently, a reproducing apparatus that uses R to W channels of subcode recorded in a lead-in area for character information such as an album title corresponding to programs recorded on a disc has been proposed. Such a disc is referred to as CD-TEXT disc (trademark). As formats of CD-TEXT discs, lead-in information (mode 4) and program area information (mode 2) have been defined. When the TOC of a CD-TEXT disc is read, the lead-in information is stored in a memory (RAM) of the reproducing apparatus. The user can see the lead-in information with a proper operation of the apparatus. On the other hand, program area information is displayed at a timing designated by the producer of the CD-TEXT disc without need to use a memory. In the following description, the mode 4 of the CD-TEXT disc will be mainly described.

When data is reproduced from a CD-TEXT disc, character information such as an album title is read from the R to W channels of subcode. The character information is decoded and stored in the memory of the reproducing apparatus. When necessary, the decoded character information is displayed. Thus, since the album title, performers, and so forth of the CD-TEXT disc are displayed, the user can know the content thereof at a glance.

In the CD-TEXT disc format, information of up to 6500 characters can be recorded. Since information such as album titles of most CD-TEXT discs is 800 characters or less, character information in up to eight languages can be recorded. As will be described later, in the CD-TEXT disc format, a text group is composed of block 0 to block 7 corresponding to up to eight languages. In each block, one character code is used. In the format, the block 0 should be present. In the case that the storage capacity of a memory of a reproducing apparatus is insufficient, only the block 0 is selected and read with priority. Thus, major languages are successively assigned to blocks in the order of lower block numbers.

When character information in all languages that have been recorded is read, a large storage capacity is required and thereby the cost of the apparatus increases. When the storage capacity of the memory is restricted, only information in a particular language (for example, the block 0) is automatically read to the memory. Thus, information in other languages (other blocks) recorded on the CD-TEXT disc cannot be effectively used. In other words, the user cannot know in what languages information has been recorded on the CD-TEXT disc. In addition, as character information to be read to the memory, the user cannot designate a language.

### OBJECTS AND SUMMARY OF THE INVENTION

Therefore, an object of the present invention is to provide a reproducing apparatus that allows a list of languages in which character information has been recorded on a disc such as a CD-TEXT disc to be displayed.

Another object of the present invention is to provide a reproducing apparatus that allows character information in a language designated by the user to be displayed in the case that the character information in a plurality of languages has been recorded on a disc such as a CD-TEXT disc.

A first aspect of the present invention is a reproducing apparatus for reproducing program data and text information corresponding thereto from a record medium, the record medium including a program area on which the program data is recorded and a management area on which the text information and language code are recorded, the reproducing apparatus comprising a reproducing means for reproducing the program data, the text information, and the language code from the program area and the management area of the record medium, a determining means for determining a language corresponds to the text information with the language code, and a display means for displaying the language name corresponding to the determined result of the determining means.

A second aspect of the present invention is a method for displaying a language name corresponding to reproduced program data from a record medium, the record medium including a program area on which the program data is recorded and a management area on which the text information and language code are recorded, the method comprising the steps of reproducing the program data, the text information, and the language code from the program area and the management area of the record medium, determining a language corresponding to the text information with the language code, and displaying the language name corresponding to the determined result of the determining step.

These and other objects, features and advantages of the present invention will become more apparent in light of the following detailed description of a best mode embodiment thereof, as illustrated in the accompanying drawings.

### BRIEF DESCRIPTION OF THE DRAWINGS

Fig. 1 is a schematic diagram showing an optical disc according to the present invention;
Fig. 2 is a schematic diagram showing the data structure of one frame recorded on the optical disc;
Fig. 3 is a schematic diagram showing the data structure of a sub-code frame according to the present invention;
Fig. 4 is a schematic diagram showing the data structure of all channels of a subcode signal according to the present invention;
Fig. 5A is a schematic diagram showing the structure of a data area recorded on the optical disc;
Fig. 5B is a schematic diagram showing the data structure of table-of-content data recorded in a lead-in area;
Fig. 6 is a table showing an example of table-of-content data recorded in the lead-in area according to the present invention;
Fig. 7 is a schematic diagram showing the data structure of R to W channels of subcode;
Fig. 8 is a schematic diagram showing the data structure of a blocked text group, a block composing a text group, and a plurality of packs composing a block;
Fig. 9A is a schematic diagram showing the data structure of a pack;
Fig. 9B is a schematic diagram showing the data structure of an ID signal of a pack;
Fig. 10 is a schematic diagram showing a data format according to the present invention;
Fig. 11 is a schematic diagram showing ID1 representing an identifier of character data displayed as a text and the types of identifiers;
Fig. 12 is a schematic diagram showing ID2 representing a program number;
Fig. 13 is a schematic diagram showing ID3 representing a sequence number of a pack connected in a block;
Fig. 14 is a schematic diagram showing ID4 representing an identifier of DBCC/SBCC, a DBCC block number, and a character potion of the current pack;
Fig. 15 is a schematic diagram showing the data structure of a pack in the case that the pack element number represented by ID2 is 00h;
Fig. 16 is a schematic diagram showing the data structure of a pack in the case that the pack element number represented by ID2 is 01h;
Fig. 17 is a schematic diagram showing the data structure of a pack in the case that the pack element number represented by ID2 is 02h;
Fig. 18 is a table showing the relation between language codes used in Europa and language names;
Fig. 19 is a table showing the relation between language codes used in other countries and language names;
Fig. 20 is a block diagram showing the structure of an optical disc reproducing apparatus for a CD-TEXT disc according to the present invention;
Fig. 21 is a block diagram showing the structure of a memory portion 76 shown in Fig. 20;
Fig. 22 is a flow chart showing a sequence of processes for displaying information in a plurality of languages;
Fig. 23 is a flow chart of a subroutine showing a real example of a size pack process at step S4 shown in Fig. 22;
Fig. 24 is a schematic diagram showing an example of a display in which languages are displayed in the order of block numbers;
Fig. 25 is a schematic diagram showing an example of a display in the case that a language is changed to another language on one disc; and
Fig. 26 is a flow chart for displaying a language corresponding to a block number designated by the user.

### DETAILED DESCRIPTION OF THE PREFERRED EMBODIMENTS

Next, with reference to the accompanying drawings, an embodiment of the present invention will be described. In the embodiment, a CD-TEXT disc is used as a disc shaped record medium. However, the present invention can be applied to other record mediums such as another type optical disc (for example, a digital video disc (DVD)), a magnetic disc, an optical tape, and a semiconductor memory. In addition, digital main information recorded on a record medium is not limited to audio data. Instead, the digital main data may be video data or the like.

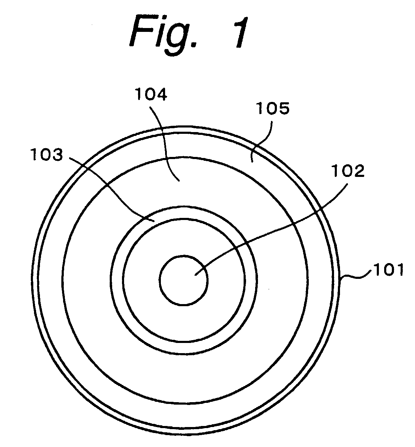

For easy understanding of the present invention, the data structure of an audio CD-TEXT disc 101 will be described. Referring to Fig. 1, a CD-TEXT disc 101 has a hole 102 at the center thereof. The CD-TEXT disc 101 has a lead-in area 103, a program area 104, and a lead-out area 105 that are formed from the inner periphery to the outer periphery. The lead-in area 103 is a program management area in which TOC (Table Of Contents) information is recorded. The program area 104 is an area in which program data is recorded. The lead-out area 105 is a program end area. In the audio CD-TEXT disc 101, audio data is recorded in the program area 104. Time information and so forth for the audio data is managed in the lead-in area 103. When the CD reproducing apparatus has read audio data in the program area 104 and the pickup has reached the lead-out area 105, the CD reproducing apparatus completes the reproducing operation of the CD-TEXT disc.

On a compact disc, a subcode is recorded along with audio data that is main data. Next, data of P and Q channels of subcode will be described. The audio signal of the compact disc is sampled at a sampling frequency of 44.1 kHz. In the sampled data, one sample or one word of 16 bits is divided into two symbols of high order 8 bits and low order 8 bits. An error correction encoding process and an interleaving process are performed for each symbol. 24 symbols of the audio data are formed as a frame. One frame is equivalent to six samples of each of left and right stereo channels.

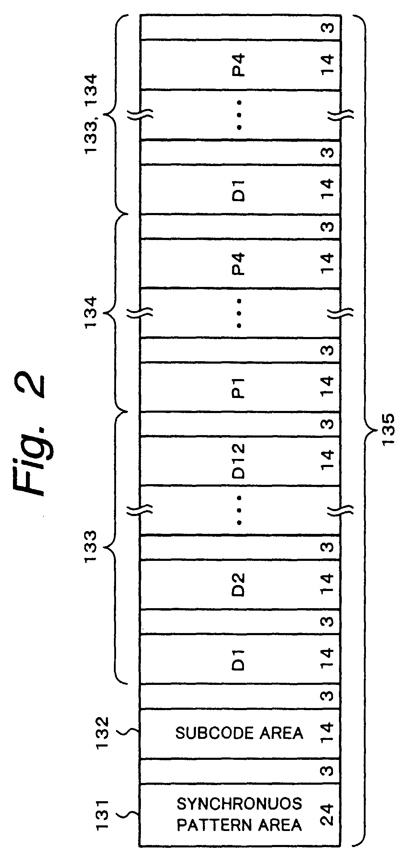

By EFM (Eight to Fourteen) modulation, each symbol is converted from eight bits into 14 bits. Fig. 2 shows the data structure of one frame that has been EFM-modulated. One frame 135 is composed of a synchronous pattern data area 131, a subcode area 132, a program data area 133, and a parity data area 134. The synchronous pattern data area 131 is composed of 24 channel bits. The subcode area 132 is composed of 14 channel bits. The program data area 133 is composed of 12 symbols of program data D1 to D12. The parity data area 134 is composed of four symbols of parity data P1 to P4. The program data area 133 and the parity data area 134 are followed by pairs of other program area 133 and other parity data area 134. Each area or each data is connected with three channel bits. One frame 135 is composed of a total of 588 channel bits.

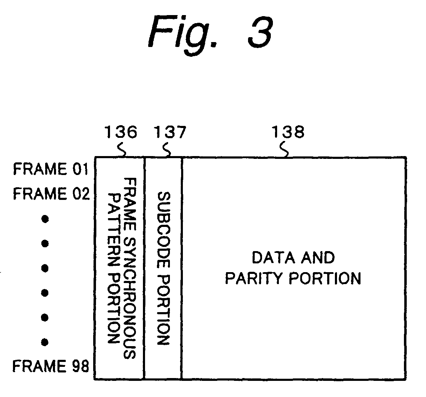

Fig. 3 shows a data structure of which areas and data portions of 98 frames 135 are successively arranged in the vertical direction. The interval of 98 frames is equal to one subcode. This interval is referred to as a subcode frame. The subcode frame is composed of a frame synchronous pattern portion 136, a subcode portion 137, and a data and parity portion 138. One subcode frame is equivalent to 1/75 second of the reproducing time of a CD.

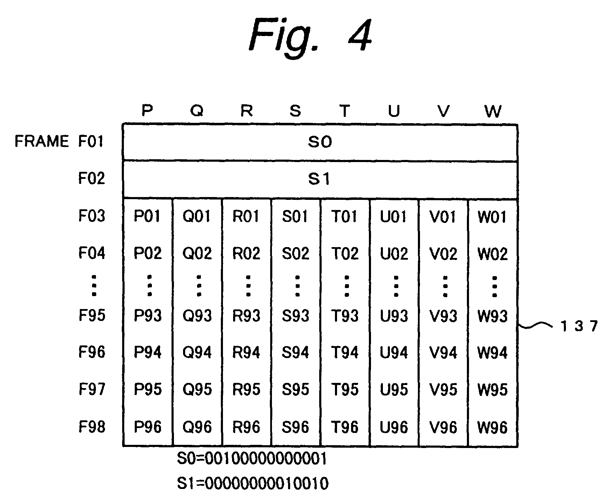

Subcode data containing data of P and Q channels is recorded in the subcode portion 137 shown in Fig. 3. Fig. 4 shows the data structure of a subcode frame of the subcode portion 137. The first frame F01 and the second frame F02 are synchronous patterns S0 and S1 of the subcode frame, respectively. As with the frame synchronous pattern, the synchronous patterns of the subcode frame are out-of-rule patterns of the EFM modulation system. Eight bits of one symbol compose P to W channels of the subcode. For example, the P channel is composed of parts of the synchronous patterns S0 and S1 and P01 to P96.

The P channel of the subcode has information that represents whether or not a program is present. The Q channel has absolute time information of a CD, time information of each program, a program number (also termed track number), an index number, and so forth. Thus, with the information of the Q channel, the reproducing operation such as a program selecting operation can be controlled. In addition, with the information of the Q channel, the user can visually know the sequence number of a current program on an optical disc, the elapsed time of the program, the absolute time of the program, and so forth.

In addition, data of six channels of R to W channels of the subcode can be used for displaying for example a still picture and a text of a program. A reproducing apparatus using such R to W channels for a still picture and a text of a program is referred to as CD-graphics player. Recently, a CD-TEXT disc for recording additional character information with the R to W channels of the lead-in area has been proposed. In the case of a CD-TEXT disc, up to around 6500 characters can be recorded with the lead-in area. Alternatively, the additional character information of a CD-text disc may be restricted to around 800 characters so that it can deal with eight languages. Thus, one CD-TEXT disc can have a title in eight language such as English, Japanese, French, German, Chinese, and Hangul,

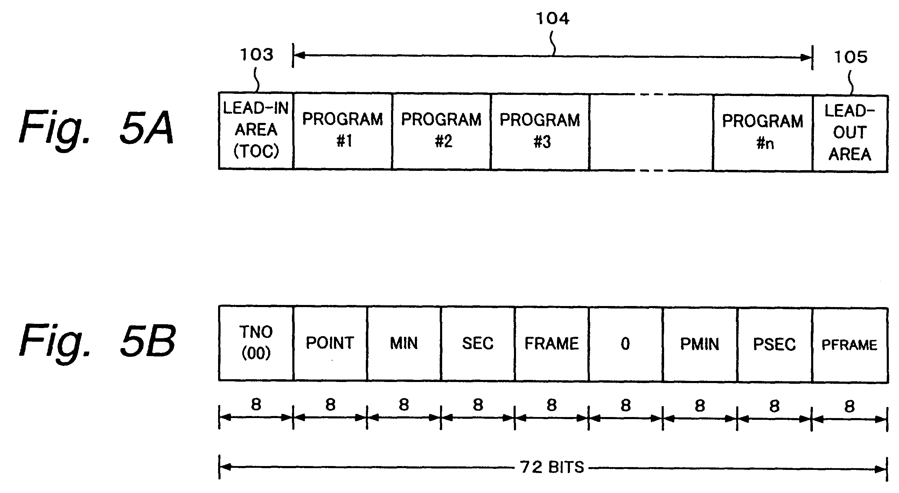

Fig. 5A shows data recorded on a compact disc. As described in Fig. 1, TOC data in the lead-in area 103, programs No. 1 to No. n in the program area 104, and data in the lead-out area 105 are outer-circumferentially recorded.

TOC data of a conventional compact disc is recorded in a Q channel of a subcode as shown in Fig. 5B. The subcode has a data structure of which one frame is composed of 98 bits. The 72 bits of the 98 bits are data. The TOC data has a format as shown in Fig. 5B.

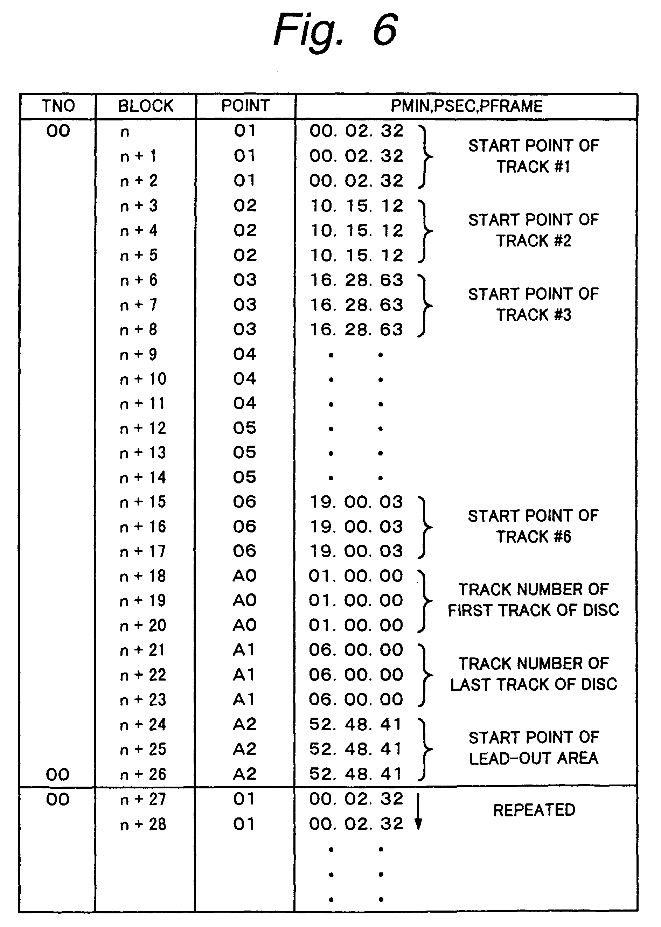

Fig. 6 shows the data structure of the TOC in the case that the number of programs is six. In the case that POINT ranges from 00 to 99, PMIN, PSEC, and PFRAME represent the start address (absolute time) of each program. In the case that POINT is A0, PMIN represents the program number of the first program of the disc. In this case, PSEC and PFRAME are 00. In the case that POINT is A1, PMIN represents the program number of the last program. In this case, PSEC and PFRAME are 00. In the case that POINT is A2, PMIN, PSEC, and PFRAME represent the start address of the lead-out area. As shown in Fig. 6, these data portions are repeated three times. In addition, these data portions are repeatedly recorded in the lead-in area. The TOC data is read by the reproducing apparatus when a CD is loaded thereto. The TOC data is stored in a memory of the apparatus.

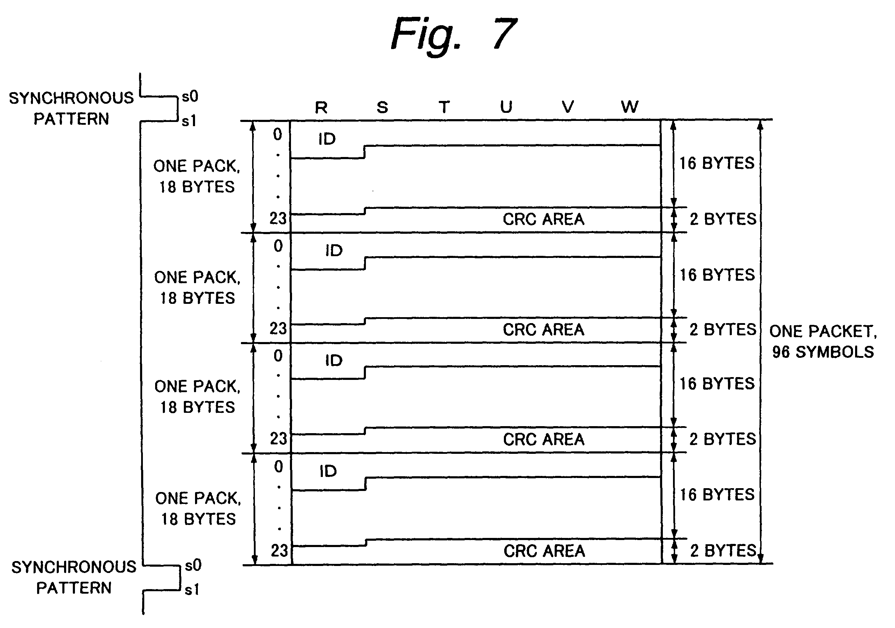

Fig. 7 shows the data structure of the TOC of a CD-TEXT disc (mode 4) according to an embodiment of the present invention. In a conventional CD, as described above, with 72 bits of one frame of the Q channel in the subcode, the number of programs and record positions of individual programs are managed. In reality, a program number that ranges from 00 to 99, a start address (absolute time) of each program, the first program number, the last program number, and the start address of the lead-out area are recorded. In addition to the Q channel of the subcode, data composed of R to W channels as shown in Fig. 7 is recorded as TOC data.

The first two frames of data composed of R to W channels are synchronous patterns S0 and S1, respectively. The remaining 96 frames contain 96 symbols (one symbol is composed of six bits). The 96 symbols are divided into four portions (one portion is composed of 24 symbols). The 24 symbols are referred to as one pack. Four packs are referred to as one packet.

Each pack starts with an ID area 1 composed of a total of 24 bits of mode information and ID codes (ID1, ID2, ID3, and ID4). The mode information represents a record mode of information recorded on the pack. ID1 represents the type of text information. The other ID2, ID3, and ID4 represent other identification information. The ID area 1 is followed by a text area 2 that has text information in association with main data. The text information is recorded as blocks (one block is composed of eight bits). Each pack has a CRC (Cyclic Redundancy Code) area 3 that composed of 16 bits. With the cyclic code, an error is detected.

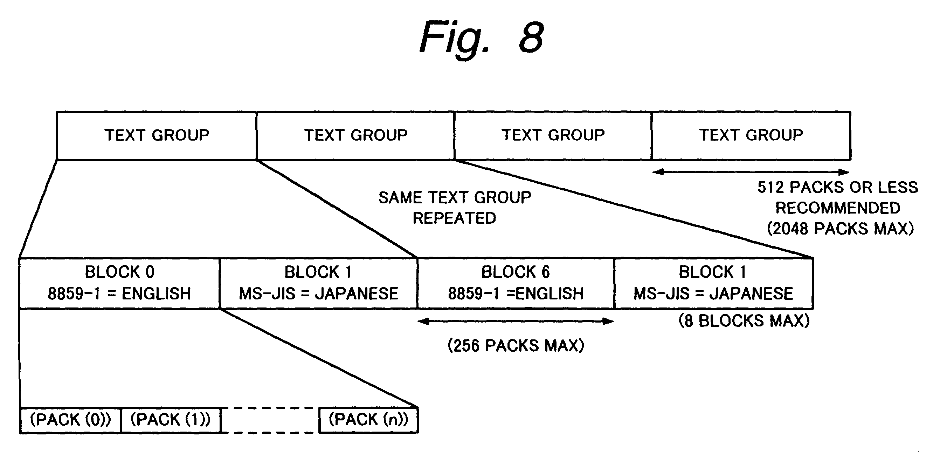

Fig. 8 shows an outlined CD-TEXT disc format. All character information is recorded in a text group. In the lead-in area, the same text group is repeatedly recorded. One text group is composed of up to eight blocks. Fig. 8 shows that one text group is composed of two blocks (block 0 and block 1).

The block 0 has English character information corresponding to character code 8859-1. The block 1 has Japanese character information corresponding to character code MS-JIS (Microsoft© - Japanese Industry Standard). Each block is composed of pack 0 to pack n.

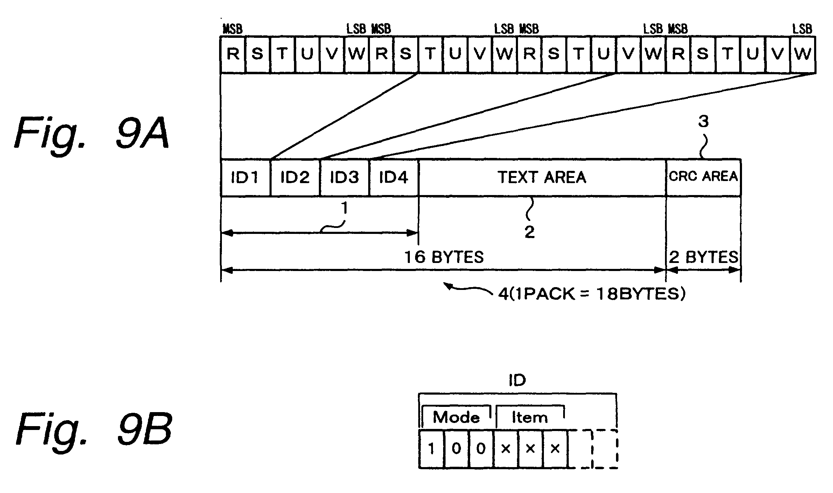

Fig. 9A is a schematic diagram showing the data format shown in Fig. 7 as serial data. As shown in Fig. 9A, 32 bits are divided by eight (one byte) and assigned to ID1, ID2, ID3, and ID4 as an ID (header) area 1. The ID area 1 is followed by a text area 2. The text area 2 is divided into byte data. The text area 2 has a length of 12 bytes. The text area 2 is followed by a CRC area 3. The CRC area 3 has a length of two bytes. A total of 18 bytes of the ID area 1, the text area 2, and the CRC area 2 are referred to as a pack. Thus, since the data of the CD-TEXT disc can be processed as byte data, the same method as that for the Q channel of a signal can be used. Consequently, the processing circuit for a CD-TEXT disc becomes simple.

In the data format of the CD-TEXT disc, an error is detected with CRC error detection code. When an error is detected, the same data is read. Thus, the same data is written four times for each pack. In addition, a data sequence is repeatedly recorded in each packet. In other words, one packet that synchronizes with a subcode sync at intervals of 1/75 second has four packs. In such a redundant recording method, a complicated error correcting circuit can be omitted.

In the redundant recording method, the number of recording times is not limited to four. In addition, the redundant recording method may be performed packet by packet or every a plurality of packets rather than pack by pack.

As shown in Fig. 9B, the ID1 of the ID area 1 is handled with eight bits that are larger than one symbol by two bits. In addition, in the case that a CD-TEXT disc is loaded to a CD reproducing apparatus that has a function for decoding R to W channels of subcode to prevent the apparatus from malfunctioning, mode identification data is written to high order three bits from MSB. In the case of the CD-TEXT format recorded in the lead-in area, mode 4 "100" that has not been defined is assigned as the mode represented by the three bits. Thus, even if a CD-TEXT disc is loaded to a conventional reproducing apparatus, it only detects an unrecognizable mode. Consequently, the reproducing apparatus only stops the operation, not malfunctions. Alternatively, mode 5 or mode 6 that have not been defined may be used instead of the mode 4.

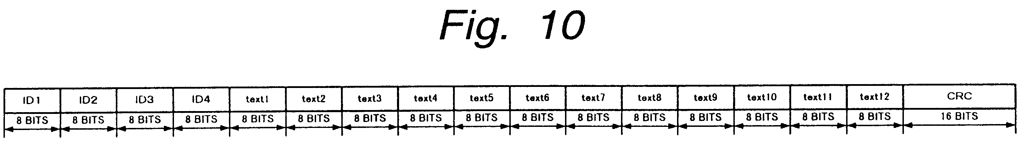

As shown in Fig. 10, in the example of which the ID1 represents the mode 4, one pack has ID1, ID2, ID3, ID4, text bytes text1 to text 12, and a CRC code that are composed of eight bits (one byte) except for the CRC code composed of 12 bits).

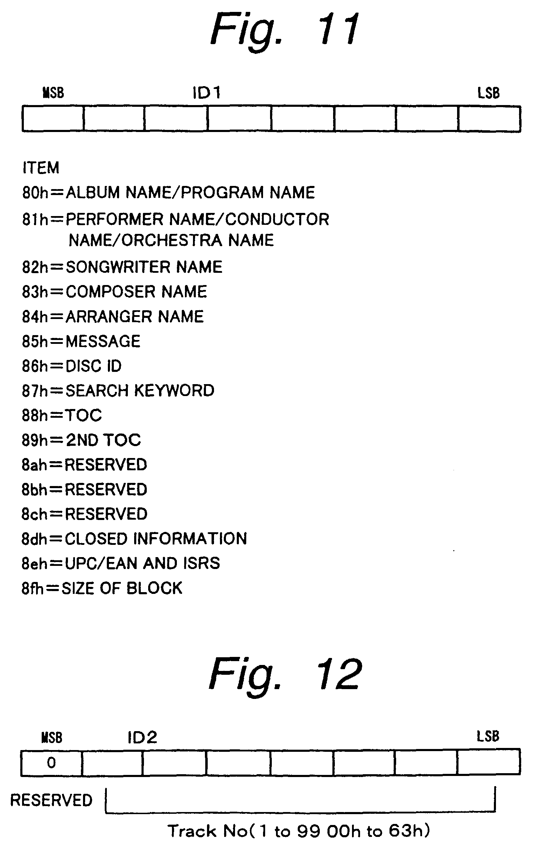

The ID1 has a length of eight bits. Fig. 11 shows the contents of the ID1. As described above, to represent the mode 4 with high order bits, the ID1 is represented as (8xh) (where h represents hexadecimal number; and x represents a low-order four bit value).

ID1 represents the content of the character string contained in text1 to text12. (80h) represents an album name/program name, (81h) represents a performer name/conductor name/orchestra name. (82h) represents a songwriter name. (83h) represents a composer name. (84h) represents an arranger name. (85h) represents a message. (86h) represents a disc ID. (87h) represents a search keyword. (88h) represents a TOC. (89h) represents a 2nd TOC. (8ah), (8bh), and (8ch) are reserved. (8dh) represents closed information. (8eh) represents UPC/EAN (POS code) of an album and ISRC of each track. (8fh) represents a size. "Reserved" represents an area that is currently not defined. Thus, an area "reserved" will be defined in future.

ID2 has a one-bit extension flag and 7-bit track number or 7-bit element number. The track number represents a track number of the first character of text data of the current pack. As shown in Fig. 12, ID2 represents a track number ranging from 1 to 99. Thus, other values such as "0h" and "100h" or higher of ID2 have special meanings. When ID2 is "00", it represents the entire disc. The MSB of ID2 is always "0". When the MSB of ID2 is "1", it represents an extension flag. The pack element number depends on the type of a pack represented by ID1.

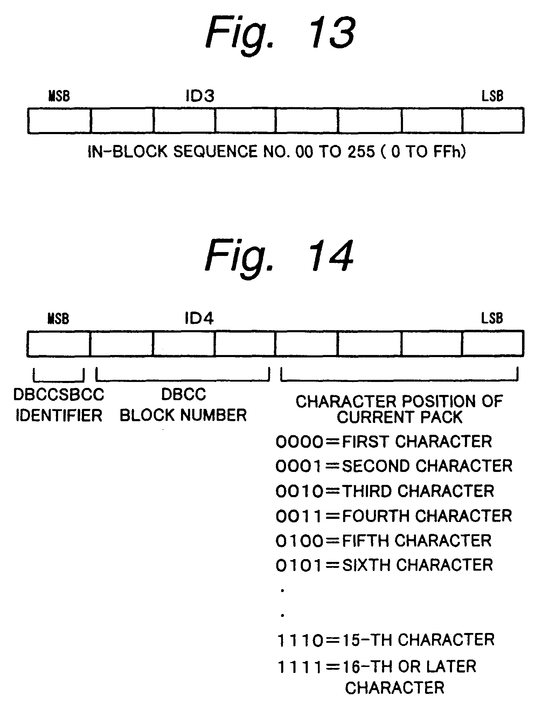

ID3 represents a sequence number of the block. As shown in Fig. 13, the sequence number of the block ranges from "00" to "255" (0h to FFh). When ID3 = "0", it represents ID1 = 80h.

As shown in Fig. 14, ID4 has a length of eight bits. The firs bit is a DBCC (Double Byte Character Code) identification bit (MSB). The next three bits represent block number. The last four bits represent the character position of the current pack. If the block includes a DBCC character string, the DBCC identification bit is "1". If the block includes a SBCC character string, the DBCC identification bit is "0". The block number represents a block number of the current pack. The last four bits represent the character position of text1 of the current pack. "0000" represents the first character. "0001" represents the second character. "0010" represents the third character. "0011", "0100", and so forth represent the fourth character, fifth character, and so forth, respectively.

As described above, the text data is composed of 12 bytes that include a character string or binary information that depends on the type of a pack represented by the ID1. In packs other than (ID1 = 88h), (ID1 = 89h), and (ID1 = 8fh), text data is composed of a character string. The character string includes a null code as a delimiter. In the case of SBCC, one null code is used. In the case of DBCC, two null codes are used. A null code is represented by (00h). The size of a character string is preferably 160 bytes of less.

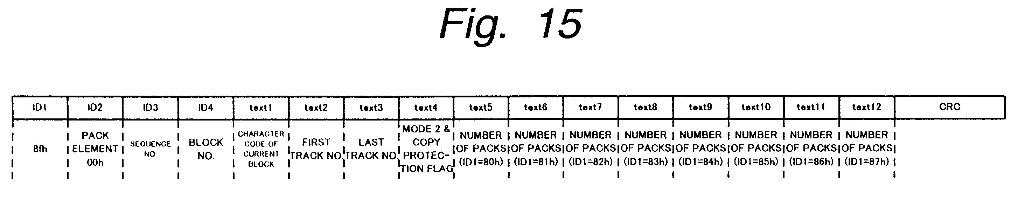

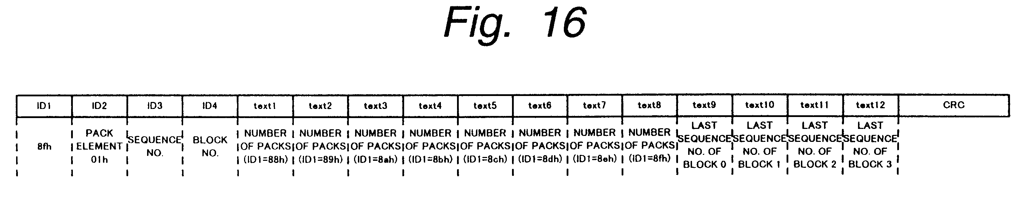

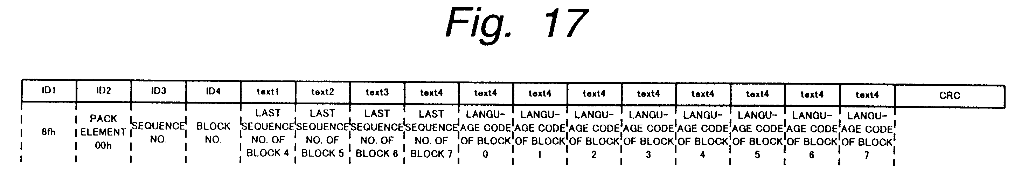

Figs. 15, 16, and 17 show the structure of a pack (ID1 = 8fh) that represents block size information according to the present invention. Fig. 15 shows the data structure of a pack in the case that the pack element number represented by the ID2 is (00h). Fig. 16 shows the data structure of a pack in the case that the pack element number represented by the ID2 is (01h). Fig. 17 shows the data structure of a pack in the case that the pack element number represented by the ID2 is (02h).

In a pack (ID2 = 00h) (see Fig. 15), an ID3 represents a sequence number. An ID4 represents a block number. text1 represent a character code of the block. The character code is used in a character string of a pack (ID1 = 80h to 85h). The character code of the other packs is (00h). The character code of the block 0 is (00h). For example, the character code is defined as follows.
00h = ISO (International Standard Organization) 8859-1
01h = ISO 646, ASCII
02h to 7F = Reserved
80h = MS-JIS
81h = Korean character code
82h = Mandarin (standard) Chinese character code
83h to FFh = Reserved

For example, in ISO 8859-1, each of numeric characters, alphabet characters, symbols, and so forth is represented by one byte. ISO 8859-1 is used as standard character code.

text2 represents the first track number. text3 represents the last track number. text4 represents mode 2 and a copy protection flag. One bit of text4 represents whether or not a CD text packet of the mode 2 has been encoded in a program area. The remaining seven bits represent a copy protection flag. text5 to text12 each represent the number of packs (ID1 = 80h) to (ID1 = 87h), respectively.

As with a pack shown in Fig. 15, in a pack (ID1 = 8fh and ID2= 01h), the ID3 and the ID4 represent a sequence number and a block number, respectively. text1 to text8 each represent the number of packs (ID1 = 88h) to (ID1 = 8fh), respectively. text9 to text12 each represent the last sequence number of the block 0 to block 3, respectively.

As with the packs shown in Figs. 15 and 16, in a pack (ID1 = 8fh and ID2 = 02h) (see Fig. 17), the ID3 and the ID4 represent a sequence number and a block number, respectively. text1 to text4 each represent the last sequence number. When the last sequence number is (00h), it represents that the relevant block is not present. A block that is not present is referred to as non-data block. text5 to text12 represent language codes of the block 0 to block 7, respectively. Character code represents the type of the format of data. On the other hand, language code represents a language in which character information of each block is written.

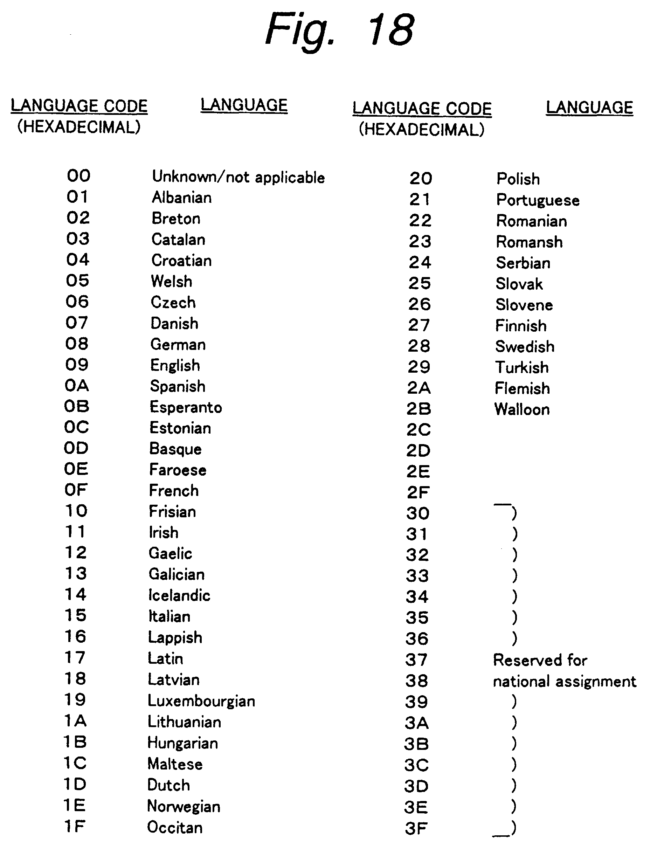

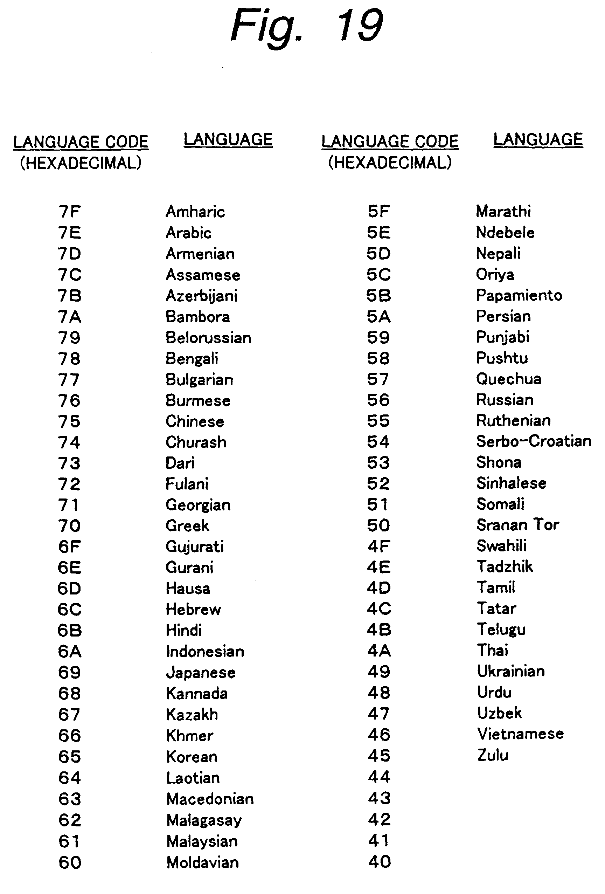

Figs. 18 and 19 are tables showing examples of the relation between language codes (one byte) and language names. Fig. 18 shows a table representing language codes used in Europa. Fig. 19 shows language codes used in other countries. These language codes are only examples. Thus, language codes corresponding to another definition may be used.

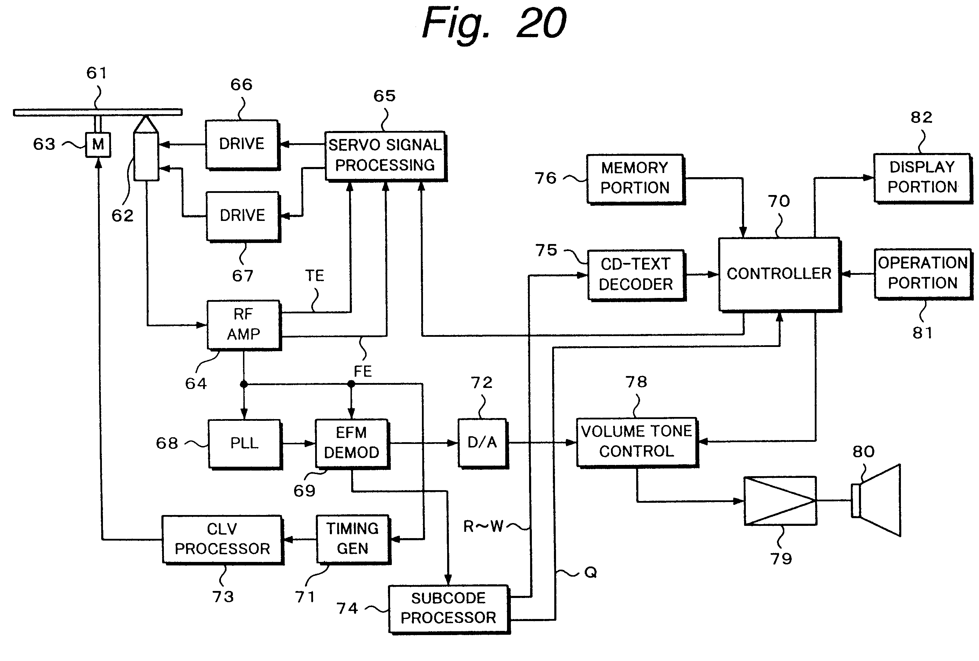

Fig. 20 shows an example of the structure of a reproducing apparatus that reproduces a program from a CD-TEXT disc that has a format in which character (additional) information is recorded in the lead-in area thereof. Referring to Fig. 20, reference numeral 61 is a CD-TEXT disc from which a program is reproduced. The CD-TEXT disc 61 is rotated and driven by a spindle motor 63. An optical pickup 62 reads a program recorded on the CD-TEXT disc.

An output signal of the optical pickup 62 is supplied to an RF amplifier 64. The RF amplifier 64 has an RF signal processing circuit that digitizes the RF signal and generates a tracking error signal TE and a focus error signal FE. The error signals TE and FE are supplied to a servo signal processing circuit 65. The servo signal processing circuit 65 performs a focus controlling process and a tracking controlling process. A focus actuator and a tracking actuator in the optical pickup 62 are driven corresponding to signals received from driving circuits 66 and 67, respectively. A unit (not shown) that moves the pickup 62 in the radial direction of the disc is controlled by the servo signal processing circuit 65. The servo signal processing circuit 65 has an interface that receives a control command from the controller 70.

A digitized reproduction signal received from the RF amplifier 64 is supplied to a PLL 68 (Phase Look Loop) 68, an EFM demodulating circuit 69, and a timing generating circuit 71. The PLL 68 generates a clock signal that synchronizes with the reproduction signal. The EFM demodulating circuit 69 performs digital signal processes such as EFM demodulating process and error correcting process. A digital audio signal received from the EFM demodulating circuit 69 is supplied to a D/A converter 72. The D/A converter 72 converts the digital audio signal into an analog audio signal. The analog audio signal is supplied to a volume tone controlling portion 78. The volume tone controlling portion 78 is controlled corresponding to a control signal received from the controller 70. A speaker 80 is connected to the volume tone control portion 78 through an audio output amplifier 79.

An output signal of the RF amplifier 64 is supplied to a timing generating circuit 71. The timing generating circuit 71 generates a timing signal that synchronizes with the reproduction signal. An output signal of the timing generating circuit 71 is supplied to a CLV (Constant Linear Velocity) processor 73. The CLV processor 73 drives the spindle motor 63 at CLV.

In the reproducing apparatus shown in Fig. 20, a subcode separated by the EFM demodulating circuit 69 is supplied to the subcode processor 74. The subcode processor 74 performs a subcode error detecting process and so forth and separates Q channel and R to W channels from the subcode. The Q channel of the subcode is supplied to the controller 70. The R to W channels of the subcode are supplied to a CD-text decoder 75.

The CD text decoder 75 decodes R to W channels of subcode. The CD text decoder 75 has an RAM with a small capacity. The RAM outputs data corresponding to a request issued from the controller 70. The controller 70 selects required data from the CD text data. The selected data is stored in a memory portion 76. In addition to character information reproduced from the lead-in area of the CD-TEXT disc and then decoded, ID information, digest information, size information, and so forth are stored in the memory portion 76. The memory portion 76 is composed of a RAM and a ROM.

The CD text decoder 75 detects an error of the CD text data. As described above, an error of CD text data is detected with an error correction code (cyclic redundancy code: CRC) for each pack. In the redundancy recording format, only when CRC check results for a plurality of redundancy packs are errors, an error flag that represents that the relevant pack has an error is set. In addition to the CD test data, the error detection flag is supplied to the controller 70. The controller 70 references the error detection flag and determines whether or not character information with the CD text data can be displayed. When the CD text data cannot be correctly read or decoded due to dust adhered on the CD-TEXT disc or a scratch thereon, the controller 70 issues an alarm.

The controller 70 issues a command to the servo signal processing circuit 65 so as to control the servo system and the decoding process. In addition, the controller 70 controls the operation of the reproducing apparatus. A display portion 82 including a display driver is connected to the controller 70. The display portion 82 is for example a liquid crystal display unit. The display portion 82 may be an external display device such as a TV monitor connected to the reproducing apparatus. The display portion 82 displays character information such as CD text. In addition, when the reproducing apparatus cannot read CD text, the display portion 82 displays an alarm. Moreover, the display portion 8 displays the type of language of the CD text data recorded on the CD-TEXT disc loaded in the reproducing apparatus.

An operation portion 81 sends an operation signal to the controller 70. The operation portion 81 has disc reproduction keys, program selection keys, program search keys, and so forth. In addition, the operation portion 81 has a mouse that allows the user to move the cursor on the screen of the display portion 82 and to operate the reproducing apparatus.

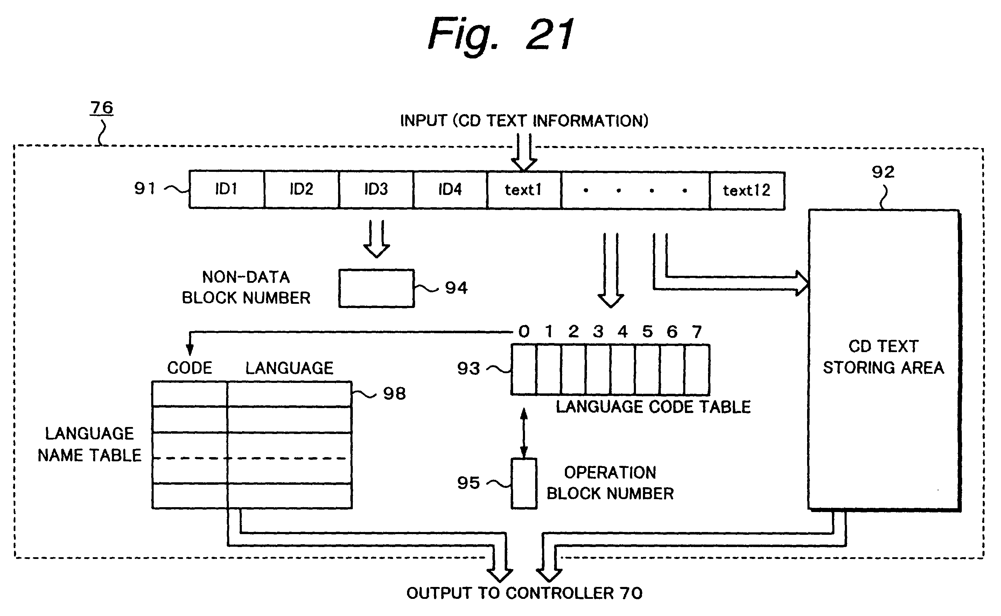

Fig. 21 is a functional block diagram showing a portion corresponding to the present invention. CD text information that has been decoded by the CD text decoder 75 is supplied to a memory portion 76 under the control of the controller 70. A buffer 91 in the memory portion 76 stores one pack of input CD text information labeled as ID1 to text12. The buffer 91 is connected to a CD text storing area 92, a language code table 93, and a non-data block number storing portion 94. The language code table 93 stores language codes of block 0 to block 7.

In association with the language code table 93, an operation block number 95 is designated. A language code corresponding to the designated operation block number 95 is supplied from the language code table 93 to the language name table 96. The language name table 96 is a table that represents the relation between language codes and language names (see Figs. 18 and 19). The language name is represented corresponding to ISO 8859-1, which is the standard character code according to the embodiment of the present invention.

The character information read from the CD text storing area 92 and the language name read from the language name table 96 are output to the controller 70. The controller 70 causes the display portion 82 to display character information and a language name. Alternatively, the controller 70 may communicate with another reproducing apparatus and cause it to display character information and a language name.

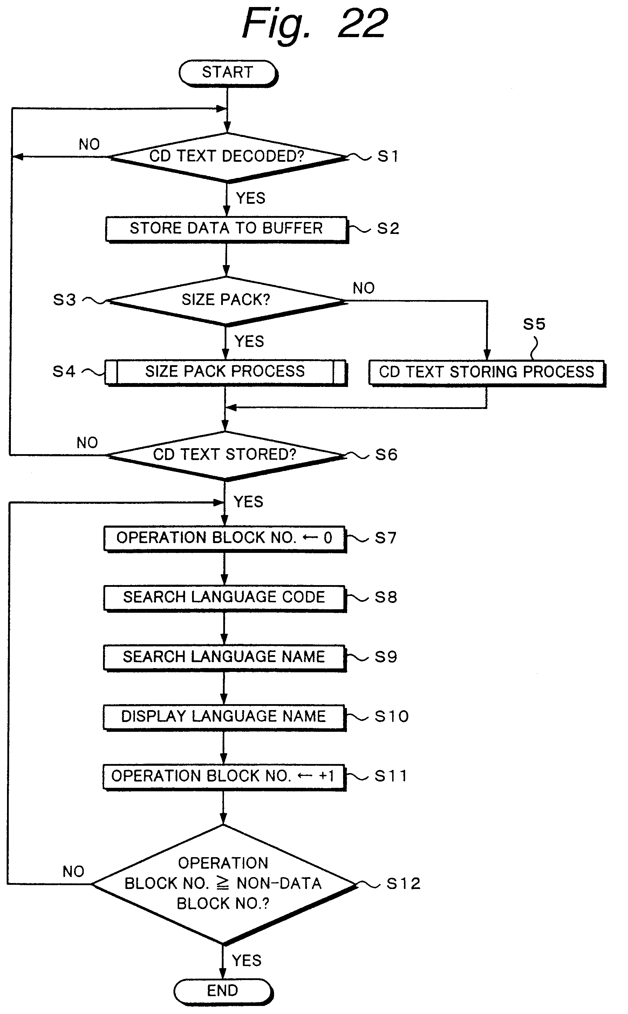

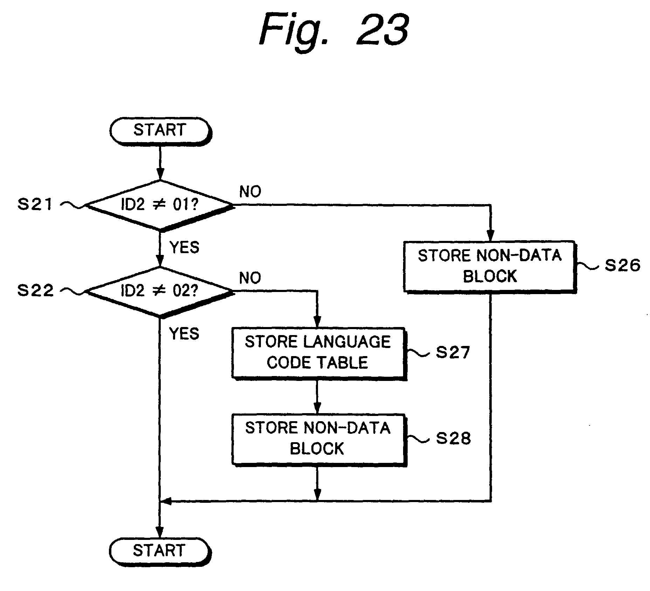

Next, with reference to flow charts shown in Figs. 22 and 23, the process of the portion shown in Fig. 21 will be described. First of all, it is determined whether or not CD text has been decoded (at step S1). In reality, when a CD-TEXT disc is loaded to a disc rotating portion, the disc is rotated. Data recorded on the disc is read by the optical pickup. In other words, TOC data is read from a lead-in area. CD text information is read from R to W channels of the TOC data. The CD text information is decoded by the CD text decoder 75. In addition, an error in the decoded CD text information is detected with CRC code added to each pack. Next, it is determined whether or not all redundantly recorded packs have errors. When all the redundantly recorded packs have errors, an error detection flag for these packs is set. Redundantly recorded packs that have no errors are treated as valid CD text information.

The decoded CD text information is supplied to the memory portion 76 under the control of the controller 70. Data of one pack is stored to the buffer 91 (at step S2). It is determined whether or not the one pack is a size pack with the ID1 (at step S3). When the determined result at step S3 is Yes (ID1 = 8fh), since the one pack is a size pack, the flow advances to step S4. At step S4, a size pack process is performed. When the determined result at step S3 is No, since the one pack is not a size pack, a CD text storing process is performed (at step S5). In other words, data other than the size pack is sent to the CD text storing area 92. The size pack process will be described later.

At step S6, it is determined whether or not the CD text information has been stored (namely, necessary CD text information has been stored in the CD text storing area 92). When the determined result at step S6 is No, the flow returns to step S1.

When the determined result at step S6 is Yes, an initial value (0) is placed in the operation block number 95 (at step S7). With a key of the operation block number, a language code is searched from the language code table 93 (at step S8). In other words, a language code corresponding to block number 0 is searched. With a key of the language code, a language name is searched from the language name table 96 (at step S9).

The searched language name is output to the controller 70. The controller 70 causes the display portion 85 to display the language name (at step S10). At step S11, the operation block number is incremented by 1. Next, it is determined whether or not the incremented operation block number is equal to or larger than a non-data block number (at step S12). The non-data block number storing portion 94 stores the non-data block number detected corresponding to the size pack information. When the operation block number is equal to or larger than the non-data block number, the process is completed. Otherwise, the flow returns to step S7. From step S7, the above-described process is repeated.

Next, with reference to a flow chart shown in Fig. 23, the size pack process will be described. At step S21, it is determined whether or not the ID2 of the pack stored in the buffer 91 is (01h). When the determined result at step S21 is Yes (namely, ID2 is not (01h)), the flow advances to step S22. At step S22, it is determined whether or not the ID2 is (02h).

As described with reference to Fig. 16, text9 to text12 of a pack (ID2 = 01h) have last sequential information of the block 0 to lock 3, respectively. Thus, with data of text9 to text12, it can be determined whether or not block 0 to block 3 are non-data blocks. As described with reference to Fig. 17, text1 to text4 of a pack (ID2 = 02h) have last sequential information of block 4 to block 7, respectively. Thus, with data of text1 to text4, it can be determined whether or not block 4 to block 7 are non-data blocks. text5 to text12 of a pack (ID2 = 02h) have language codes of block 0 to block 7, respectively.

Thus, at step S26 in Fig. 23, with data of text9 to tex12 of a pack (ID2 = 01h), a non-data block number is detected. The non-data block number is stored in the non-data block number storing portion 94 in the memory portion 76. At step S28, with data of text1 to text4 of a pack (ID2 = 02h), a non-data block number is detected. The detected non-data block number is stored in the non-data block number storing portion 94 in the memory portion 76. At step S27, with data of text5 to text12 of a pack (ID2 = 02h), a language code is detected. The detected language code is stored to the language code table 93. In such a manner, the size pack storing process is performed.

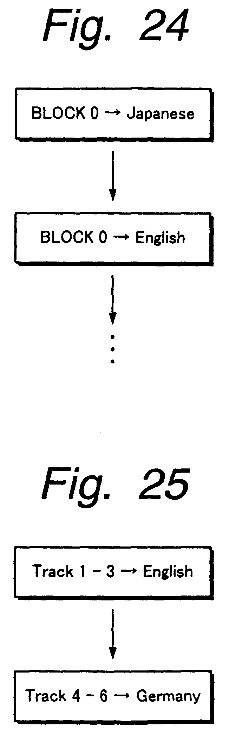

Fig. 24 is a schematic diagram showing an example of which language names are displayed in the order of block numbers. When the initial value of the operation block number is 0, "Block 0 -> Japanese" is displayed as denoted by reference numeral 85a in Fig. 24. When the operation block number is incremented, "Block 1 -> English" is displayed as denoted by reference numeral 85b. The language name is varied whenever the controller 70 performs the process represented by the flow chart shown in Fig. 22.

Fig. 25 is schematic diagram showing an example of which the program numbers 1 to 3 are English programs and the program numbers 4 to 6 are German programs. In other words, the same language names are grouped and displayed. To do that, a step for detecting the same language name should be added.

The language names may be displayed in various manners as well as those shown in Figs. 24 and 25. For example, detected language names may be displayed at a time. Language names may be displayed with only uppercase letters or only lowercase letters. Alternatively, the initial letters of language names may be displayed.

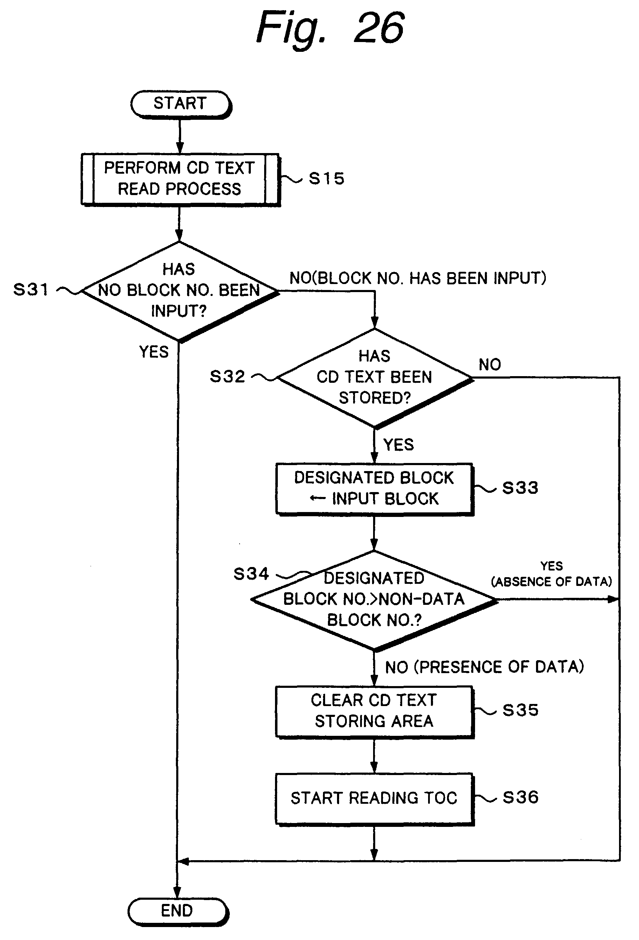

Next, with reference to a flow chart shown in Fig. 26, a second embodiment of the present invention will be described. The overall structure (see Fig. 20) and memory portion 76 (see Fig. 21) of the second embodiment are the same as those of the first embodiment. However, the operation portion 81 has keys for designating language names. When the controller 70 receives a key input signal, a designated block number is generated. The generated block number is stored in a dedicated memory element of the memory portion 76.

As shown in Fig. 26, at step S15, the process of the flow chart shown in Fig. 22 is performed (this process is referred to as CD text read process). Thus, the language name of the CD text is displayed on the display portion. With reference to the language name displayed on the display portion, the user designates a language name in which CD text is used in the reproducing apparatus with a block number. The operation portion has block number input keys.

At step S31 in Fig. 26, it is determined whether or not a block number has been input. When the determined result at step S31 is No, the process is completed. In this case, an input allowable period may be designated. When the designated period elapses, the process may be completed. When the determined result at step S31 is Yes, it is determined whether or not CD text has been stored (at step S32). When the determined result at step S32 is Yes, the input block number is stored as a designated block number (at step S33).

Next, it is determined whether or not the designated block number is a non-data block number (at step S34). Since CD text is stored in the ascending order of block numbers, by comparing the first non-data block number with the designated block number, it is determined whether or not CD text data has been recorded to the designated block number. Step S34 in Fig. 26 is the same as step S12 in Fig. 22. When the determined result at step S34 is Yes, since a number designation error has taken place, the flow returns to a step for waiting for a block number.

When the determined result at step S34 is No, the flow advances to step S35. At step S35, the CD text storing area 92 is cleared. Thus, the CD text storing area 92 is restored to the initial state. At step S36, TOC is re-read instead of the TOC read operation at step S15. The TOC is re-read for only the designated block number. The block number is obtained with the ID4 of each pack. Thus, CD text data in a language designated by the user is read to the memory portion (CD test storing area 92) of the reproducing apparatus.

When a CD of which the relation between block numbers and language names is known is reproduced, the relation is detected. In this case, the language names may not be omitted. As a language designating method, a language selecting key that causes a designated block number to be varied corresponding to input data may be used instead of the block number input method. In other words, with the language selecting key, regardless of the block numbers, languages to be read to the reproducing apparatus can be successively changed.

As described above, according to the present invention, when character information in a plurality of languages has been recorded on a disc such as a CD-TEXT disc, language names can be displayed. Thus, the user can know the type of a language of character information.

In addition, with a language selecting means, the user allows character information in a desired language to be stored to the memory of the reproducing apparatus. Thus, even if the storage capacity of the memory of the reproducing apparatus is limited, the character information in the block 0 is not automatically read. Instead, the user can select a desired language for the character information.

Although the present invention has been shown and described with respect to a best mode embodiment thereof, it should be understood by those skilled in the art that the foregoing and various other changes, omissions, and additions in the form and detail thereof may be made therein without departing from the spirit and scope of the present invention.

## Claims

1. A reproducing apparatus for reproducing program data and text information corresponding thereto from a record medium, the record medium including a program area on which the program data is recorded and a management area on which the text information and language code are recorded, the reproducing apparatus comprising:
reproducing means for reproducing the program data, the text information, and the language code from the program area and the management area of the record medium;
determining means for determining a language corresponds to the text information with the language code; and
display means for displaying the language name corresponding to the determined result of said determining means.

2. The reproducing apparatus as set forth in claim 1, further comprising:
selecting means for selecting one language from the determined result of said determining means.

3. The reproducing apparatus as set forth in claim 2,
wherein said selecting means selects one language corresponding to a key operation of the user.

4. The reproducing apparatus as set forth in claim 2,
wherein said display means displays a language name corresponding to the selected result of said selecting means.

5. The reproducing apparatus as set forth in claim 1,
wherein said display means displays a language name switched corresponding to the program data.

6. A method for displaying a language name corresponding to reproduced program data from a record medium, the record medium including a program area on which the program data is recorded and a management area on which the text information and language code are recorded, the method comprising the steps of:
reproducing the program data, the text information, and the language code from the program area and the management area of the record medium;
determining a language corresponding to the text information with the language code; and
displaying the language name corresponding to the determined result of said determining step.
